# EUROPÄISCHE PATENTANMELDUNG

(11) **EP 4 435 478 A1**
(43) Veröffentlichungstag der Anmeldung: **25.09.2024**
(21) Anmeldenummer: 23163987.3
(22) Anmeldetag: 24.03.2023
(51) Int. Cl.: G01V 8/12, G01V 8/14, G01V 8/20, G01V 8/22

(54) **OPTISCHER SENSOR UND VERFAHREN ZUM BETRIEB EINES OPTISCHEN SENSORS**

(71) Anmelder: Leuze electronic GmbH + Co. KG, 73277 Owen/Teck (DE)
(72) Erfinder: Kamuf, Matthias, 81373 München (DE); Wagner, Markus, 86949 Windach (DE); Feller, Bernhard, 86316 Friedberg (DE); Quapil, Gerald, 73277 Owen/Teck (DE)
(74) Vertreter: Ruckh, Rainer Gerhard

(57) **Zusammenfassung**

Die Erfindung betrifft einen optischen Sensor 1 mit wenigstens einem Lichtstrahlen (3) emittierenden Sender (4, 4.1-4.N), wenigstens einem Lichtstrahlen (3) empfangenden Empfänger (6, 6.1-6.N) und einer Auswerteeinheit (9), in welcher abhängig von Empfangssignalen (6a) des Empfängers (6, 6.1-6.N) ein Objektfeststellungssignal generiert wird. Die Lichtstrahlen (3) sind mit einer Folge von Signalabschnitten (11) moduliert. Die modulierten Signalabschnitte (11) weisen im Frequenzraum ein vorgegebenes Spektrum auf. Empfangsseitig wird eine spektrale Zerlegung von Empfangssignalen (6a) durchgeführt. In der Auswerteeinheit (9) wird geprüft, ob in einem spektral zerlegten Empfangssignal (6a) eine Anzahl von vorgegebenen Frequenzanteilen vorhanden ist oder nicht. Abhängig hiervon wird beurteilt, ob die vom Sender (4, 4.1-4.N) emittierten Lichtstrahlen (3) zum Empfänger (6, 6.1-6.N) geführt sind oder nicht.

## Beschreibung

Die Erfindung betrifft einen optischen Sensor und ein Verfahren zum Betrieb eines optischen Sensors.

Der optische Sensor dient insbesondere zur Erfassung von Objekten in einem Überwachungsbereich. Hierzu umfasst der optische Sensor wenigstens einen Lichtstrahlen emittierenden Sender und einen Lichtstrahlen empfangenden Empfänger. Weiterhin umfasst der optische Sensor eine Auswerteeinheit, in welcher in Abhängigkeit von Empfangssignalen des Empfängers ein Objektfeststellungssignal generiert wird.

Typischerweise arbeitet der optische Sensor nach dem Lichtschrankenprinzip, so dass eine Objektdetektion dadurch erfolgt, dass eine Unterbrechung des Strahlengangs der Lichtstrahlen, die den Überwachungsbereich passieren, registriert wird.

Für den Fall, dass der optische Sensor nur einen Sender oder Empfänger aufweist, ist dieser als Lichtschranke oder Reflexionslichtschranke ausgebildet. Weist der optische Sensor mehrere Paare von Sendern und Empfängern auf, ist dieser als Lichtvorhang oder Reflex-Lichtvorhang ausgebildet.

Generell besteht ein Problem bei derartigen optischen Sensoren darin, dass Fremdlichteinflüsse, insbesondere von Störlichtquellen in den optischen Sensor eingestrahltes Störlicht zu Fehlfunktionen des optischen Sensors führen kann. Dabei kann durch Störlichteinstrahlungen beispielsweise ein freier Überwachungsbereich vorgetäuscht werden, obwohl sich ein Objekt im Überwachungsbereich befindet.

Um Fremdlichteinflüsse zu minimieren, ist es bekannt, dass der Sender des optischen Sensors Lichtstrahlen in Form von kodierten Lichtimpulsen emittiert. Weiterhin ist es bekannt, die Lichtstrahlen mit einer Modulationsfrequenz zu modulieren.

Es hat sich gezeigt, dass trotz dieser Maßnahmen oft die gewünschte Störlichtfestigkeit und/oder Empfindlichkeit bei dem optischen Sensor nicht erzielt wird. Eine Erhöhung der Empfindlichkeit kann zur Steigerung der Reichweite beitragen.

Der Erfindung liegt die Aufgabe zugrunde, einen optischen Sensor mit weiter verbesserter Störlichtfestigkeit und/oder Empfindlichkeit bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit wenigstens einem Lichtstrahlen emittierenden Sender, wenigstens einem Lichtstrahlen empfangenden Empfänger und einer Auswerteeinheit, in welcher abhängig von Empfangssignalen des Empfängers ein Objektfeststellungssignal generiert wird. Die Lichtstrahlen sind mit einer Folge von Signalabschnitten moduliert. Die modulierten Signalabschnitte weisen im Frequenzraum ein vorgegebenes Spektrum auf. Empfangsseitig wird eine spektrale Zerlegung von Empfangssignalen durchgeführt. In der Auswerteeinheit wird geprüft, ob in einem spektral zerlegten Empfangssignal eine vorgegebene Anzahl von vorgegebenen Frequenzanteilen und vorteilhaft vorgegebenen Amplituden/Phasen vorhanden ist oder nicht. Abhängig hiervon wird beurteilt, ob die vom Sender emittierten Lichtstrahlen zum Empfänger geführt sind oder nicht.

Die Erfindung betrifft auch ein entsprechendes Verfahren.

Der oder jeder Sender emittiert, vorzugsweise in regelmäßigen Abständen, Lichtstrahlen in Form definierter Signalabschnitte. Der Grundgedanke der Erfindung besteht darin, in der Auswerteeinheit eine spektrale Zerlegung von an dem oder den Empfängern registrierten Empfangssignalen vorzunehmen. Als Kriterium dafür, ob die Signalabschnitte in den Lichtstrahlen des zugeordneten Senders vom jeweiligen Empfänger auftreffen, wird in der Auswerteeinheit eine Frequenzanalyse derart vorgenommen, dass geprüft wird, ob in der Auswerteeinheit insbesondere als Sollwerte abgespeicherte Frequenzanteile im spektral zerlegten Empfangssignal vorhanden sind. Damit wird eine sichere und zuverlässige Aussage darüber getroffen, ob die Lichtstrahlen eines Senders über eine Messstrecke zum zugeordneten Empfänger geführt sind oder nicht, was zur Generierung des Objektfeststellungssignals genutzt wird.

Durch die Vorgabe von Frequenzanteile in der Auswerteeinheit, die in einem spektral zerlegten Empfangssignal vorhanden sind, wird eine sichere und zugleich fehlertolerante Erkennung von Signalabschnitten in den Lichtstrahlen eines Senders ermöglicht. Insbesondere wird eine hohe Fehlersicherheit gegenüber Fremdlichteinstrahlungen erzielt.

Ein wesentlicher Anspruch besteht darin, dass nicht alle im Frequenzspektrum des spektral zerlegten Empfangssignals erkannt werden müssen, um Signalabschnitte der Lichtstrahlen zu identifizieren. Vielmehr wird eine begrenzte Anzahl von zu erkennenden Frequenzanteilen in der Auswerteeinheit als Sollwertvorgabe definiert, wobei die Anzahl so gewählt ist, dass einerseits die Signalabschnitte in den Lichtstrahlen sicher identifiziert werden können und anderseits eine hohe Fehlertoleranz und damit Verfügbarkeit bei der Objektdetektion gegeben ist. Das Spektrum kann z.B. vorwiegend aus Frequenzlinien bestehen. Diese Frequenzlinien weichen technisch bedingt von der idealisierten Form ab (Verbreiterung). Das Vorhandensein solcher Frequenzlinien kann durch Auswertung der benachbarten Frequenzbereiche ermittelt werden.

Die Genauigkeit bei der Erfassung von Signalabschnitten kann insbesondere dadurch erhöht werden, dass in der Auswerteeinheit in spektral zerlegten Empfangssignalen vorhandene Frequenzlinien hinsichtlich Anzahl und/oder Pegel und/oder Phase gewichtet werden.

Gemäß einer vorteilhaften Ausführungsform weist ein Signalabschnitt zumindest näherungsweise den Signalverlauf eines Kardinal-Sinus auf.

Das Frequenzspektrum eines solchen Kardinal-Sinus ist im Idealfall rechteckförmig und lässt sich empfangsseitig gut auswerten.

Weiter vorteilhaft emittiert der oder jeder Sender eine Folge von sich periodisch wiederholenden Signalabschnitten, wodurch ein Frequenzspektrum mit Spektrallinien mit zumindest näherungsweise konstantem Frequenzabstand und konstanten Pegeln erhalten wird.

Diese Frequenzlinien lassen sich einfach abtasten und auswerten.

Gemäß einer vorteilhaften Ausführungsform wird die spektrale Zerlegung von Empfangssignalen mittels einer Spektralanalyse durchgeführt. Weiterhin kann es vorteilshaft sein, wenn die spektrale Zerlegung mittels einer komplexwertigen FFT (Fast Fourier Transformation) erfolgt.

Aus dem komplexwertigen Spektrum können beispielsweise der Pegel durch Betragsbildung und die Phase durch Ermittlung des Winkels des komplexwertigen Ergebnisses ermittelt werden. Damit ist es möglich, die Real-/Imaginäranteile des komplexen Spektrums oder Betrag und/oder Phase des Spektrums zu bewerten.

Dabei erfolgt eine Abtastung von Frequenzlinien des spektralen Empfangssignals mit einer Abtastfrequenz, die signifikant höher ist, als die Frequenzen des spektral zerlegten Empfangssignals. Idealerweise liegt die Abtastfrequenz um vielfaches über den relevanten Frequenzanteilen des Empfangssignals. Gute Ergebnisse lassen sich beispielsweise mit einem Faktor größer als 2, z.B. 3 erzielen. Höhere Abtastfrequenzen erhöhen die Qualität der Ergebnisse, allerdings auch den Rechenaufwand.

Dies ist eine Voraussetzung dafür, dass bei der Signalabtastung alle erforderlichen Frequenzlinien des spektral zerlegten Empfangssignals erfassbar sind.

Alternativ ist es möglich, dass das spektral zerlegte Empfangssignal durch Mischung in ein niederfrequentes Signal transformiert wird.

Damit kann entsprechend die Abtastfrequenz für die Signalabtastung kleiner gewählt werden, was den Rechenaufwand bei der Signalauswertung reduziert.

Um den Rechenaufwand weiter zu reduzieren kann in einer anderen Ausführungsform die Abtastung als Unterabtastung durchgeführt werden.

Die Unterabtastung erfolgt vorteilhaft mit einer Abtastfrequenz, die zumindest näherungsweise einem ganzzahligen Bruchteil 1/N (wobei N=2, 3, 4...) der Frequenz eines in den Frequenzraum transformierten Signalabschnitts entspricht. In diesem Fall überlagern sich die Amplituden der Harmonischen dieser Frequenz, wodurch besonders einfach mehrere Frequenzen, d.h. Spektrallinien des Signalabschnitts ermittelt werden.

Gemäß einer vorteilhaften Ausführungsform bildet der Sender und der Empfänger eine Lichtschrankenanordnung aus.

Weist der optische Sensor mehrere Sender-Empfängerpaare auf, bildet der optische Sensor einen Lichtvorhang aus. Die Objektdetektion erfolgt nach dem Lichtschrankenprinzip.

Bei dieser Konfiguration befinden sich der Sender und Empfänger des oder jedes Sender-Empfängerpaars an gegenüberliegenden Rändern eines Überwachungsbereichs. Bei freiem Überwachungsbereich treffen bei jedem Sender-Empfängerpaar die die Messstrecken ausbildenden Lichtstrahlen des Senders auf den zugeordneten Empfänger, was anhand der Analyse in der Auswerteeinheit registriert wird. Bei einem Objekteingriff im Überwachungsbereich wird der Strahlengang der Lichtstrahlen des oder wenigstens eines Sender-Empfängerpaars unterbrochen.

Gemäß einer weiteren vorteilhaften Ausführungsform bildet der Sender und der Empfänger eine Reflexions-Lichtschrankenanordnung aus. Weist dieser optische Sensor mehrere Sender-Empfängerpaare auf, bildet dieser einen Reflex-Lichtvorhang aus.

Der Sender und Empfänger des oder jedes Sender-Empfängerpaars sind dann an einem Rand des Überwachungsbereichs angeordnet. Am anderen Rand des Überwachungsbereichs befindet sich ein Reflektor. Bei freiem Überwachungsbereich gelangen die Lichtstrahlen des Senders eines Sender-Empfängerpaars ungehindert zum Reflektor und werden an diesem zurück zum zugeordneten Empfänger geführt. Bei einem Objekteingriff wird der Strahlengang der Lichtstrahlen wenigstens eines Senders unterbrochen.

Gemäß einer weiteren vorteilhaften Ausführungsform bildet der Sender und der Empfänger eine Lichttasteranordnung aus.

Auch in diesem Fall kann der optische Sensor mehrere Sender-Empfängerpaare aufweisen.

Der optische Sensor arbeitet in diesem Fall nach dem Lichttasterprinzip.

Nur wenn ein Objekt im Überwachungsbereich vorhanden ist, wird die Messstrecke eines Sender-Empfängerpaars gebildet, in dem vom Sender emittierte Lichtstrahlen vom Objekt zum zugeordneten Empfänger reflektiert werden. Gemäß einer vorteilhaften Ausführungsform werden Signalabschnitte für die Lichtstrahlen digital erzeugt, analog nachbearbeitet und dann den Lichtstrahlen der oder eines Senders aufgeprägt.

Dies wird vorteilhaft dadurch erreicht, dass Signalabschnitte in einer Tabelle eines FPGA oder eines ASIC oder eines Prozesses abgespeichert sind. Die Signalabschnitte werden aus der Tabelle ausgelesen und über einen Digital-Analog-Wandler den Sendern oder einem Sender zugeführt.

Weiter vorteilhaft werden in dem Digital-Analog-Wandler generierte Signalfolgen analog nachbearbeitet.

Beispielsweise ist eine Filterung mit analogen Filtern durchführbar.

Weiterhin erfolgt eine Verstärkung der von dem oder den Sendern auszusendenden Signalen.

Dabei ist es möglich, dass jeder Sender (4, 4.1-4.N) mittels eines Verstärkers (16, 16.1-16.N, 17, 17.1-17.N) oder Gruppen von Sendern (4, 4.1-4.N) mittels eines gemeinsamen Verstärkers (16, 16.1-16.N, 17, 17.1-17.N) angesteuert werden.

Insbesondere kann die Gruppe von Sendern alle Sender des optischen Sensors umfassen, so dass zur Verstärkung der Signale aller Sender nur ein Verstärker benötigt wird.

Entsprechend sind empfangsseitig vorteilhaft Mittel für eine analoge Vorverarbeitung von Empfangssignalen vorhanden.

Als analoge Vorverarbeitung kann eine Tiefpass-, Hochpass- oder Bandpassfilterung vorgesehen sein.

Auch kann die Vorverarbeitung eine nicht lineare Vorverarbeitung mit Schwellwerten und/oder logarithmischer Verstärkungen umfassen.

Weiterhin erfolgt eine Verstärkung von Empfangssignalen des oder der Empfänger. Dabei kann jedem Empfänger ein Verstärker zur Verstärkung von Empfangssignalen oder einer Gruppe von Empfängern ein Verstärker zur Verstärkung von Empfangssignalen zugeordnet sein.

Insbesondere kann eine Gruppe von Empfängern alle Empfänger des optischen Sensors umfassen, so dass zur Verstärkung der Empfangssignale aller Empfänger nur ein Verstärker benötigt wird.

Die Auswerteeinheit kann vorteilhaft von einem ASIC oder FPGA gebildet sein. Alternativ kann die Auswertung in Softwaremodulen eines Prozessors durchgeführt werden. Es kann weiterhin vorteilhaft sein, dass die Auswertung teilweise in ASIC/FPGA und zusätzlichen Softwaremodulen in Prozessoren erfolgt.

Bei einem optischen Sensor mit mehreren Sender-Empfänger-Paaren sind dessen Lichtstrahlen durch die Zeitpunkte der Anwendung von Signalabschnitten oder durch unterschiedliche Spektralverteilungen der Signalabschnitte unterscheidbar.

Damit können die Lichtstrahlen aller Sender empfangsseitig eindeutig identifiziert und voneinander unterschieden werden.

Dies ist insbesondere dann vorteilhaft, wenn die Lichtstrahlen wenigstens eines Sender-Empfängerpaars einen Synchronisationsstrahl bilden. Die Sender und Empfänger werden anhand dessen optisch synchronisiert, wobei der Synchronisationsstrahl anhand seiner Signalabschnitte identifizierbar ist.

Weiter vorteilhaft kann die eindeutige Identifizierbarkeit von Lichtstrahlen des optischen Sensors dazu genutzt werden, dass sich die Signalabschnitte, die von dessen Sender oder Sendern emittiert werden, eindeutig von Signalabschnitten von Sendern eines weiteren optischen Sensors unterscheiden.

Damit können mehrere gleichartige optische Sensoren dicht nebeneinander angeordnet sein und parallel betrieben werden, ohne dass sich die optischen Sensoren gegenseitig beeinflussen.

Das Objektfeststellungssignal eines optischen Sensors mit mehreren Sender-Empfänger-Paaren kann Geometrie-, insbesondere Konturinformationen von detektierten Objekten liefern, in dem insbesondere festgestellt wird, welche Lichtstrahlen des optischen Sensors durch das Objekt unterbrochen werden.

Besonders vorteilhaft ist das Objektfeststellungssignal ein binäres Schaltsignal, dessen Schaltzustände angeben, ob ein Objekt in einem vom optischen Sensor überwachten Überwachungsbereich vorhanden ist oder nicht.

Insbesondere in diesem Fall ist der optische Sensor vorteilhaft als Sicherheitssensor ausgebildet, der im Bereich der Sicherheitstechnik eingesetzt werden kann. Hierzu weist der optische Sensor einen fehlersicheren Aufbau auf, was durch eine redundante Auswerteeinheit, beispielsweise in Form einer mehrkanaligen Rechnerstruktur realisiert werden kann.

Die Erfindung wird im Folgenden anhand der Zeichnungen erläutert. Es zeigen:
- Figur 1:: Ausführungsbeispiel des erfindungsgemäßen optischen Sensors in Form einer Lichtschranke.
- Figur 2:: Ausführungsbeispiel des erfindungsgemäßen optischen Sensors in Form eines Lichtvorhangs.
- Figur 3:: Ausführungsbeispiele des erfindungsgemäßen optischen Sensors in Form einer Reflexions-Lichtschranke.
- Figur 4:: Ausführungsbeispiel des erfindungsgemäßen optischen Sensors in Form einer Lichttasters.
- Figur 5:: Beispiel eines von einem Sender des optischen Sensors emittierten Signalabschnitts
a) Zeitbereich.
b) Frequenzbereich.
- Figur 6:: Erstes Beispiel einer Senderansteuerung für den optischen Sensor gemäß Figur 2.
- Figur 7:: Zweites Beispiel einer Senderansteuerung für den optischen Sensor gemäß Figur 2.
- Figur 8:: Erstes Beispiel einer empfangsseitigen Schaltungsanordnung des optischen Sensors gemäß Figur 2.
- Figur 9:: Zeitdiagramme für ein erstes Ausführungsbeispiel einer Signalauswertung
a) Zeitbereich.
b) Frequenzbereich.
- Figur 10:: Zeitdiagramme für ein zweites Ausführungsbeispiel einer Signalauswertung
a) Zeitbereich.
b) Frequenzbereich.
- Figur 11:: Zweites Beispiel einer empfangsseitigen Schaltungsanordnung des optischen Sensors gemäß Figur 2.
- Figur 12:: Drittes Beispiel einer empfangsseitigen Schaltungsanordnung des optischen Sensors gemäß Figur 2.

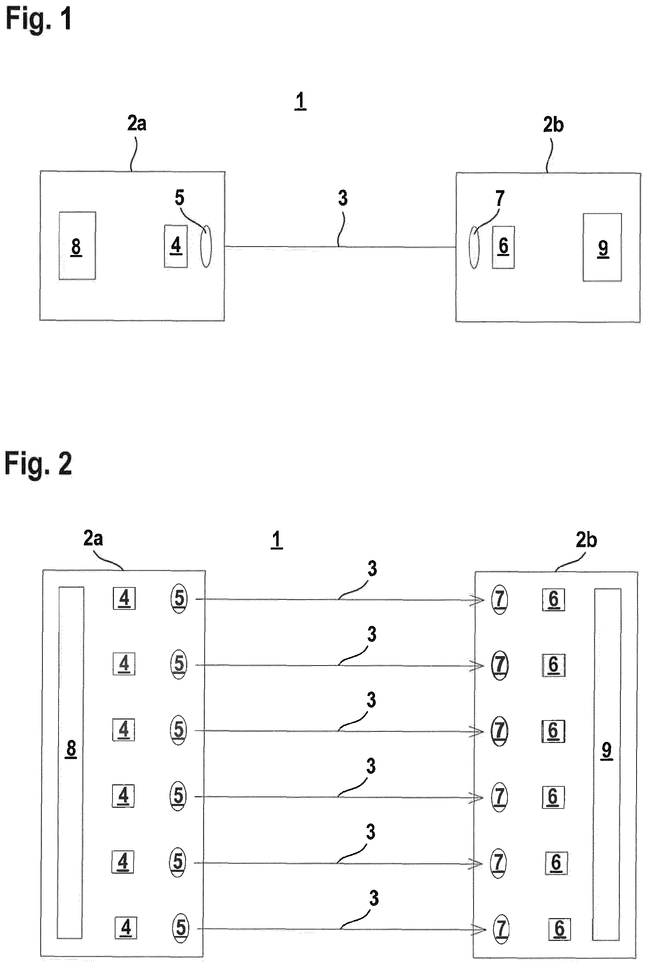

Figur 1 zeigt ein Ausführungsbeispiel des erfindungsgemäßen optischen Sensors 1 in Form einer Lichtschranke.

Die Lichtschranke weist ein erstes Gehäuse 2a auf, in welchem ein Lichtstrahlen 3 emittierender Sender 4 angeordnet ist, dem eine Sendeoptik 5 zugeordnet ist. Weiterhin weist die Lichtschranke ein zweites Gehäuse 2b auf, in dem ein Lichtstrahlen 3 empfangender Empfänger 6 mit einer vorgeordneten Empfangsoptik 7 angeordnet ist.

Die Gehäuse 2a, 2b sind an gegenüberliegenden Rändern eines Überwachungsbereichs so angeordnet, dass bei freiem Überwachungsbereich die Lichtstrahlen 3 analog einer Messstrecke verlaufend ungehindert auf den Empfänger 6 treffen. Bei einem Objekteingriff im Überwachungsbereich werden die Lichtstrahlen 3 unterbrochen.

Der Sender 4 wird von einer Sendersteuerung 8 gesteuert. Dem Empfänger 6 ist eine Auswerteeinheit 9 zugeordnet. Die Auswerteeinheit 9 steuert den Empfänger 6 und wertet die Empfangssignale 6a der Empfänger 6 aus, wodurch als Objektfeststellungssignal ein binäres Schaltsignal generiert wird, dessen Schaltzustände angeben ob sich ein Objekt im Überwachungsbereich befindet oder nicht.

Die Auswerteeinheit 9 kann einen mehrkanaligen Aufbau aufweisen, falls die Lichtschranke ein Sicherheitssensor ist.

Figur 2 zeigt schematisch den Aufbau eines Ausführungsbeispiels des erfindungsgemäßen optischen Sensors 1 in Form eines Lichtvorhangs zur Erfassung von Objekten innerhalb eines Überwachungsbereichs.

Der Lichtvorhang weist ein erstes Gehäuse 2a mit einer Reihenanordnung von Lichtstrahlen 3 emittierenden Sendern 4 und diesen zugeordneten Sendeoptiken 5 auf. Weiterhin weist der Lichtvorhang ein zweites Gehäuse 2b mit einer Reihenanordnung von Lichtstrahlen 3 empfangenden Empfängern 6 auf, welchen jeweils eine Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist. Dieses Sender-Empfängerpaar bildet eine Strahlachse. Im vorliegenden Fall sind sechs Strahlachsen vorgesehen. Natürlich kann der Lichtvorhang auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet die Empfangssignale 6a der Empfänger 6 zur Generierung eines binären Schaltsignals aus, dessen Schaltzustände angeben, ob sich ein Objekt im Überwachungsbereich befindet oder nicht. Generell kann diese Auswertung nicht nur in einer zeitlichen Sequenz nacheinander für mehrere Lichtstrahlen 3, sondern auch gleichzeitig für mehrere Lichtstrahlen 3 erfolgen. Bei freiem Überwachungsbereich gelangen die Lichtstrahlen 3 der Strahlachsen ungehindert zum Empfänger 6 der jeweiligen Strahlachse. Bei einem Obj ekteingriff wird wenigstens eine Strahlachse unterbrochen. Die Auswerteeinheit 9 kann einen mehrkanaligen Aufbau aufweisen, falls der Lichtvorhang einen Sicherheitssensor bildet.

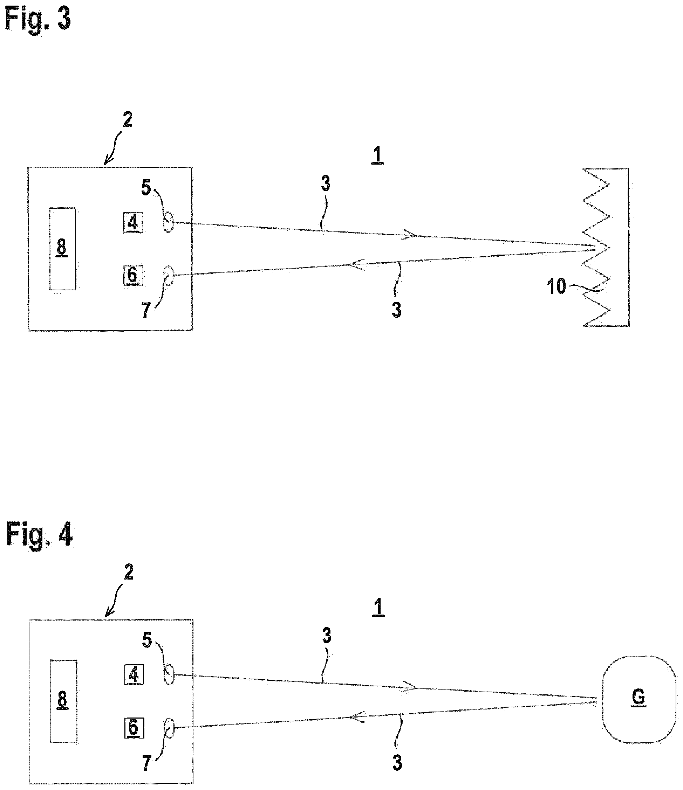

Figur 3 zeigt einen optischen Sensor 1 in Form einer Reflexions-Lichtschranke. Der Sender 4 und der Empfänger 6 des optischen Sensors 1 sind im Unterschied zur Ausführungsform gemäß Figur 1 in einem gemeinsamen Gehäuse 2 integriert, das an einem Rand des Überwachungsbereichs angeordnet ist, wobei am gegenüberliegenden Rand des Überwachungsbereichs ein Reflektor 10 angeordnet ist. Bei freiem Überwachungsbereich werden die Lichtstrahlen 3 des Senders 4 entlang einer Messstrecke durch den Überwachungsbereich geführt, am Reflektor 10 reflektiert und von dort zum Empfänger 6 geführt.

Diese Ausführungsform des optischen Sensors 1 kann auf mehrere Sender-Empfängerpaare erweitert werden.

Figur 4 zeigt einen optischen Sensor 1 in Form eines Lichttasters. Analog zur Ausführungsform gemäß Figur 3 sind der Sender 4 und Empfänger 6 in einem gemeinsamen Gehäuse 2 integriert. In diesem Fall wird eine Messstrecke mit Lichtstrahlen 3 vom Sender 4 zum Empfänger 6 nur dann gebildet, wenn die Lichtstrahlen 3 an einem zu detektierenden Gegenstand G reflektiert und zurück zum Empfänger 6 geführt sind. Auch in diesem Fall wird in der Auswerteeinheit 9 ein binäres Schaltsignal generiert, dessen Schaltzustände eine Objektfeststellung angeben, d.h. ob im Überwachungsbereich der Gegenstand G vorhanden ist oder nicht.

Auch diese Ausführungsform des optischen Sensors 1 kann auf mehrere Sender-Empfängerpaare erweitert werden.

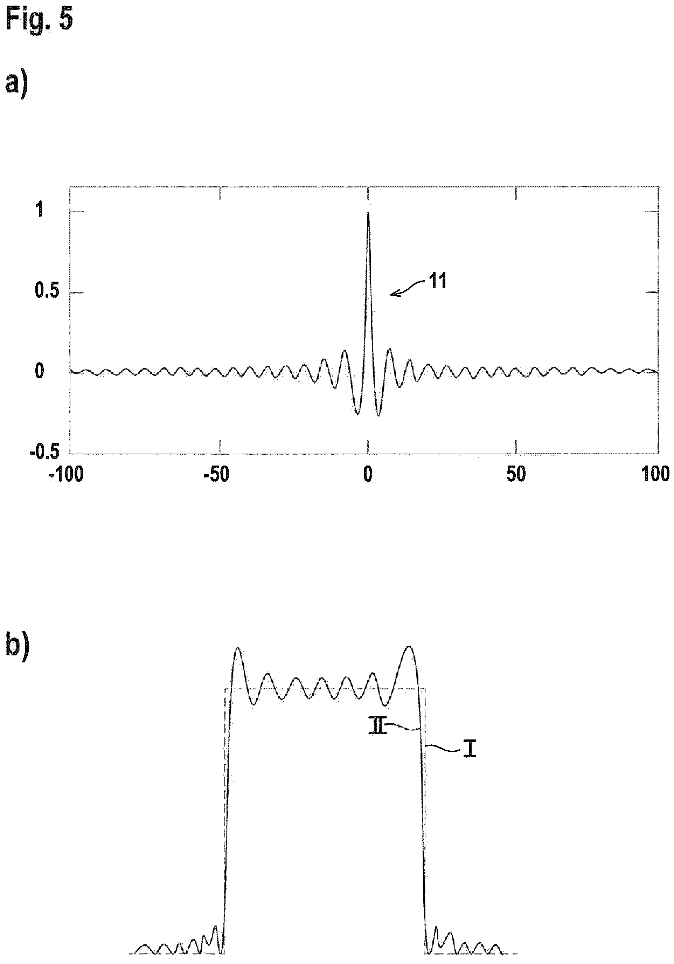

Erfindungsgemäß emittiert der oder jeder Sender 4 Lichtstrahlen 3 in Form von Folgen von Signalabschnitten 11, die den Lichtstrahlen 3 aufmoduliert sind. Ein Beispiel hierfür zeigt Figur 5a.

Der Signalabschnitt 11 ist in diesem Fall in Form eines Kardinal-Sinus ausgebildet. Vorteilhaft wird diesem Signalabschnitt 11 ein Offset hinzuaddiert, so dass alle Signalwerte positiv sind.

Figur 5b zeigt das Frequenzspektrum dieses Signalabschnittes 11. Dabei ist mit I der ideale Frequenzverlauf für einen zeitlich unbegrenzten Verlauf eines Kardinal-Sinus des Signalabschnitts 11 dargestellt. Mit II ist das reale Spektrum für einen breiten Sinus-Cardinale Verlauf dargestellt.

Der oder jeder Sender 4 emittiert, vorzugsweise in regelmäßigen Abständen, Lichtstrahlen 3 in Form definierter Signalabschnitte 11, wie sie beispielhaft in Figur 5a dargestellt sind. Erfindungsgemäß wird in der Auswerteeinheit 9 eine spektrale Zerlegung von an dem oder den Empfängern 6 registrierter Empfangssignalen 6a vorgenommen. Als Kriterium dafür, ob die Signalabschnitte 11 in den Lichtstrahlen 3 des zugeordneten Senders 4 vom jeweiligen Empfänger 6 auftreffen, wird in der Auswerteeinheit 9 eine Frequenzanalyse derart vorgenommen, dass geprüft wird, ob in der Auswerteeinheit 9 insbesondere als Sollwerte abgespeicherte Frequenzlinien im spektral zerlegten Empfangssignal 6a vorhanden sind. Damit wird eine sichere und zuverlässige Aussage darüber getroffen, ob die Lichtstrahlen 3 eines Senders 4 über eine Messstrecke zum zugeordneten Empfänger 6 geführt sind oder nicht, was zur Generierung des Objektfeststellungssignals genutzt wird.

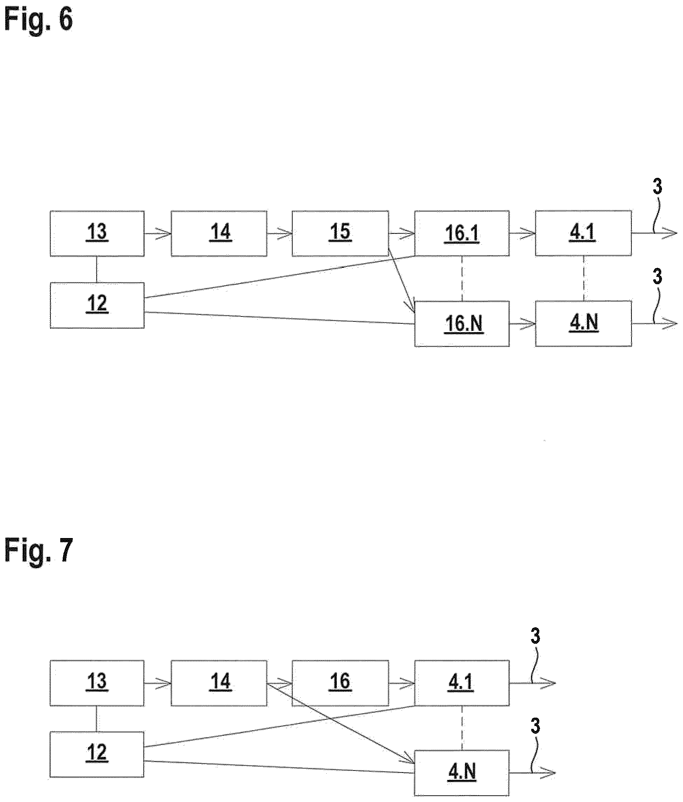

Figur 6 zeigt ein erstes Beispiel einer Senderansteuerung für die Generierung von Signalabschnitten 11, die von Sendern 4.1 - 4.N des Lichtvorhangs gemäß Figur 2 emittiert werden.

Mit einer Steuerung 12 in Form eines ASIC, FPGA oder Prozessors werden aus einer Tabelle Signalabschnitte 11 ausgelesen und dieser einer Signal-Paket-Generierung 13 zugeführt, die entsprechende digitale Signale generiert. Diese werden in einem Digital-Analog-Wandler 14 in analoge Signale gewandelt, die einer Nachverarbeitungseinheit 15 zugeführt werden, in der insbesondere auch ein evtl. notwendiger Offset zu den Signalabschnitten 11 addiert wird. Die so aufbereiteten analogen Signale werden den Sendern 4.1 - 4.N zugeführt, wobei jedem Sender 4.1-4.N ein Verstärker 16.1. - 16.N zur Verstärkung dieser Signale zugeordnet ist.

Figur 7 zeigt ein weiteres Beispiel einer Senderansteuerung. Diese unterscheidet sich von der Ausführungsform gemäß Figur 6 dadurch, dass nur ein Verstärker 16 vorgesehen ist, der nacheinander den einzelnen Sendern 4.1-4.N zugeschaltet wird, um deren Signale zu verstärken. Zudem ist in diesem Fall keine Nachverarbeitungseinheit 15 vorhanden. Notwendige Offsets oder Nachbearbeitungen sind dann schon in den hinterlegten Signalabschnitten 11 berücksichtigt.

Die Sensoransteuerungen gemäß den Figuren 6 und 7 sind Bestandteil der Sendersteuerung 8 des optischen Sensors 1 gemäß Figur 2.

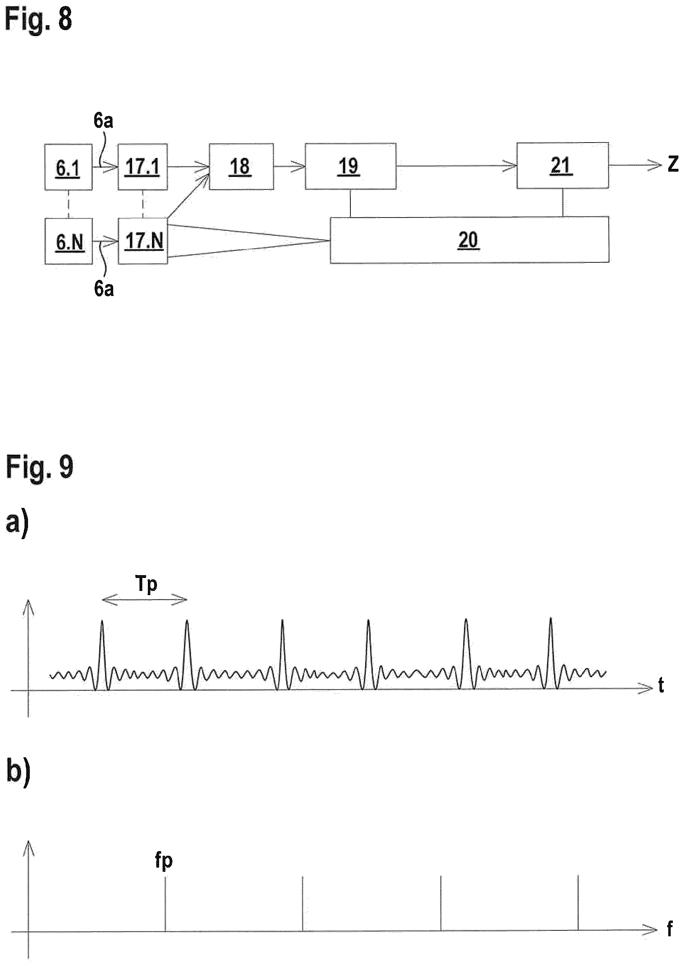

Figur 8 zeigt ein erstes Beispiel einer empfangsseitigen Schaltungsanordnung für den optischen Sensor 1 gemäß Figur 2.

In den Empfängern 6.1 - 6.N generierte Empfangssignale 6a werden in jeweils einem Verstärker 17.1.- 17.N verstärkt und dann einer Vorverarbeitungseinheit 18 zugeführt. Dort erfolgt eine analoge Vorverarbeitung der Empfangssignale 6a, beispielsweise in Form einer Hochpass-, Tiefpass-, Bandpass-Filterung oder Offsetkorrektur.

In einer FFT-Einheit 19 erfolgt eine spektrale Zerlegung der Empfangssignale 6a mittels einer FFT (Fast Fourier Transformation). Die FFT-Einheit 19 wird von einer Steuerung 20 gesteuert. Die Auswertung der spektral zerlegten Empfangssignale 6a erfolgt in einem Auswerter 21. Die in der FFT-Einheit 19 generierten Frequenzsignale werden dem Auswerter 21 zugeführt. Die Steuerung 20 und der Auswerter 21 sind Bestandteile der Auswerteeinheit 9.

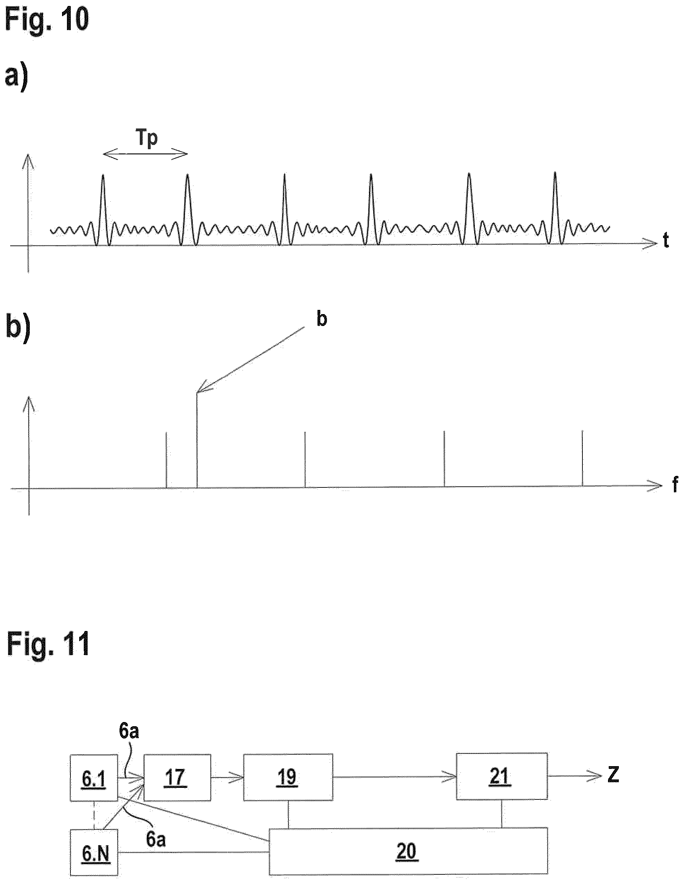

In den Figuren 9a, 9b bzw. 10a, 10b ist die Funktionsweise des optischen Sensors 1 gemäß den Figuren 2 und 6 bzw. 7 sowie Figur 8 veranschaulicht.

Figur 9a zeigt die periodische Wiederholung eines Signalabschnitts 11 mit einer Periode Tp.

Figur 9b zeigt das zugehörige Frequenzspektrum mit der Frequenzlinie der Grundfrequenz fp = 1/Tp, sowie den vielfachen Frequenzlinien von fp.

Ein Sender 4.1-4.N emittiert periodisch Signalabschnitte 11 wie in Figur 9a bzw. 10a dargestellt.

Für den Fall, dass alle Signalabschnitte 11 des Senders 4.1-4.N auf den zugeordneten Empfänger 6.1-6.N auftreffen, wird mittels der FFT-Einheit 19 die in Figur 9b dargestellte spektrale Zerlegung des Empfangssignals 6a erhalten. Diese wird mit dem Auswerter 21 abgetastet und ausgewertet. Die Abtastfrequenz der Abtastung ist größer als die Frequenzanteile des spektral zerlegten Empfangssignals 6a.

Die so erfassten Frequenzlinien des spektral zerlegten Empfangssignals 6a (Figur 9b) stimmen mit einer in der Auswerteeinheit 9 hinterlegten Erwartungshaltung in Form von Sollwerten überein. Die Erwartungshaltungen können Frequenzbereiche sein, in denen Frequenzlinien liegen sollen und/oder auch Amplitudenbereiche und/oder Phasenbereiche solcher Frequenzlinien sein. Der Auswerter 21 generiert somit als Ausgangssignal, dass die Messstrecke dieser Strahlachse frei/unterbrochen ist.

Werden auf diese Weise alle Strahlachsen als frei registriert, generiert die Auswerteeinheit 9 als Objektfeststellungssignal ein Schaltsignal mit dem Schaltzustand freier Überwachungsbereich.

Figur 10b zeigt den Fall, wenn nicht alle Frequenzlinien, die von den Signalabschnitten 11 stammen, registriert werden. Statt dessen werden jedoch Frequenzlinien b, bedingt durch Fremdeinstrahlungen, miterfasst.

Die Auswertung in der Auswerteeinheit 9 erfolgt fehlertolerant derart, dass nicht alle Frequenzlinien des Spektrums der Signalabschnitte 11 bewertet werden müssen. Auch können durch Fremdeinstrahlungen bedingte Frequenzlinien akzeptiert werden. Ist diese Bedingung im Fall von Figur 10b erfüllt, wird die Strahlachse noch als frei gewertet.

Bei größeren Abweichungen des spektral zerlegten Empfangssignals 6a von der Erwartungshaltung wird die Strahlachse als unterbrochen gewertet und das Schaltsignal nimmt den Schaltzustand "Objekt vorhanden" an.

Figur 11 zeigt eine Variante der Ausführungsform der Figur 10. Die Ausführungsform gemäß Figur 11 unterscheidet sich von der Ausführungsform gemäß Figur 10 dadurch, dass nur ein Verstärker 17 vorhanden ist, in welchem die Empfangssignale 6a aller Empfänger 6.1 - 6.N verstärkt werden.

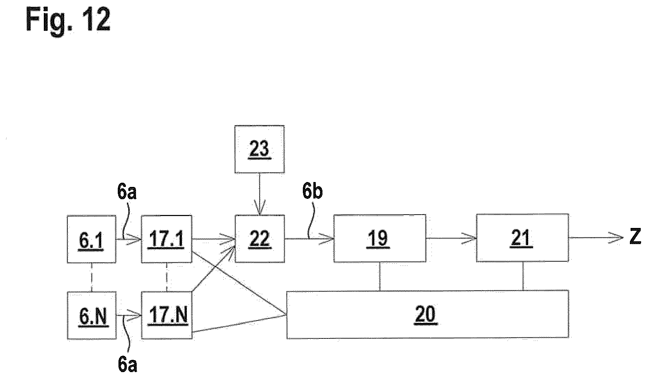

Figur 12 zeigt eine weitere Variante der Ausführungsform gemäß Figur 10. Die in dem Verstärker 17 verstärkten Empfangssignale 6a der Empfänger 6.1 - 6.N werden einen Mischer 22 zugeführt, wodurch die Empfangssingale in einen niederfrequentierten Bereich dadurch transformiert werden, in dem sie mit einer in einem Frequenzgenerator 23 generierten Mischfrequenz *f*ₒ multipliziert werden. Besonders vorteilhaft sind komplexwertige Mischverfahren die die Phaseninformation des Nutzsignals erhalten. Der Mischer 22 kann eine Analogschaltung oder eine digitale Schaltung, wie einen Hilbert-Mischer aufweisen.

Durch die Transformation der Empfangssignale 6a in einen niederfrequenten Frequenzbereich, kann der Rechenzeitaufwand bei der Signalauswertung reduziert werden.

Die Empfangssignale 6a oder die niederfrequenten Empfangssignale 6b können mit einer Unterabtastung abgetastet werden, d.h. mit einer erheblich niedrigeren Frequenz abgetastet werden.

### Bezugszeichenliste

- (1): Optischer Sensor
- (2): Gehäuse
- (2a): Gehäuse
- (2b): Gehäuse
- (3): Lichtstrahl
- (4): Sender
- (4.1-4.N): Sender
- (5): Sendeoptik
- (6): Empfänger
- (6.1-6.N): Empfänger
- (6a): Empfangssignal
- (6b): niederfrequentes Empfangssignal
- (7): Empfangsoptik
- (8): Sendersteuerung
- (9): Auswerteeinheit
- (10): Reflektor
- (11): Signalabschnitt
- (12): Steuerung
- (13): Signal-Paket-Generierung
- (14): Digital-Analog-Wandler
- (15): Nachverarbeitungseinheit
- (16): Verstärker
- (16.1-16.N): Verstärker
- (17): Verstärker
- (17.1-17.N): Verstärker
- (18): Vorverarbeitungseinheit
- (19): FFT-Einheit
- (20): Steuerung
- (21): Auswerter
- (22): Mischer
- (23): Frequenzgenerator

- (b): Frequenzanteil eines Fremdsignals
- (fp): Grundfrequenz
- (Tp): Periodendauer
- (G): Gegenstand

## Patentansprüche

1. Optischer Sensor (1) mit wenigstens einem Lichtstrahlen (3) emittierenden Sender (4, 4.1-4.N), wenigstens einem Lichtstrahlen (3) empfangenden Empfänger (6, 6.1-6.N) und einer Auswerteeinheit (9), in welcher abhängig von Empfangssignalen (6a) des Empfängers (6, 6.1-6.N) ein Objektfeststellungssignal generiert wird, **dadurch gekennzeichnet, dass** die Lichtstrahlen (3) mit einer Folge von Signalabschnitten (11) moduliert sind, wobei die modulierten Signalabschnitte (11) im Frequenzraum ein vorgegebenes Spektrum aufweisen, dass empfangsseitig eine spektrale Zerlegung von Empfangssignalen (6a) durchgeführt wird, und dass in der Auswerteeinheit (9) geprüft wird, ob in einem spektral zerlegten Empfangssignal (6a) eine Anzahl von vorgegebenen Frequenzanteilen vorhanden ist oder nicht und abhängig hiervon beurteilt wird, ob die vom Sender (4, 4.1-4.N) emittierten Lichtstrahlen (3) zum Empfänger (6, 6.1-6.N) geführt sind oder nicht.

2. Optischer Sensor (1) nach Anspruch 1, **dadurch gekennzeichnet, dass** die spektrale Zerlegung als Ergebnis zusätzlich ein Phasenspektrum liefert.

3. Optischer Sensor (1) nach Anspruch 2, **dadurch gekennzeichnet, dass** die spektrale Zerlegung durch eine komplexwertige FFT erfolgt.

4. Optischer Sensor (1) nach Anspruch 3, **dadurch gekennzeichnet, dass** der Sender (4) und der Empfänger (6) eine Lichtschrankenanordnung ausbilden.

5. Optischer Sensor (1) nach einem der Ansprüche 1 bis 4, **dadurch gekennzeichnet, dass** der Sender (4) und der Empfänger (6) eine Reflexions-Lichtschrankenanordnung ausbilden.

6. Optischer Sensor (1) nach einem der Ansprüche 1 bis 5 **dadurch gekennzeichnet, dass** der Sender (4) und der Empfänger (6) eine Lichttasteranordnung ausbilden.

7. Optischer Sensor (1) nach einem der Ansprüche 1 bis 6, **dadurch gekennzeichnet, dass** dieser mehrere Sender-Empfängerpaare ausbildende Sender (4, 4.1-4.N) und Empfänger (6, 6.1-6.N) aufweist.

8. Optischer Sensor (1) nach einem der Ansprüche 1 bis 7, **dadurch gekennzeichnet, dass** dessen Lichtstrahlen (3) durch unterschiedliche Spektralverteilungen der Signalabschnitte (11) unterscheidbar sind.

9. Optischer Sensor (1) nach Anspruch 8, **dadurch gekennzeichnet, dass** die Lichtstrahlen (3) wenigstens eines Sender-Empfängerpaars einen oder mehrere Synchronisationsstrahlen bilden, anhand dessen die Sender (4, 4.1-4.N) und Empfänger (6, 6.1-6.N) optisch synchronisiert werden, wobei die Synchronisationsstrahlen anhand ihrer Signalabschnitte (11) identifizierbar sind.

10. Optischer Sensor (1) nach einem der Ansprüche 1 bis 9, **dadurch gekennzeichnet, dass** sich die Signalabschnitte (11), die von dessen Sender (4) oder Sendern (4, 4.1-4.N) emittiert werden, eindeutig von Signalabschnitten (11) von Sendern (4, 4.1-4.N) eines weiteren optischen Sensors unterscheiden.

11. Optischer Sensor (1) nach einem der Ansprüche 1 bis 10, **dadurch gekennzeichnet, dass** das Objektfeststellungssignal ein binäres Schaltsignal ist oder Informationen über Objektkonturen enthält.

12. Optischer Sensor (1) nach einem der Ansprüche 1 bis 11, **dadurch gekennzeichnet, dass** die vorgegebenen Frequenzanteile als Sollwerte in der Auswerteeinheit (9) abgespeichert sind.

13. Optischer Sensor (1) nach einem der Ansprüche 1 bis 12, **dadurch gekennzeichnet, dass** in der Auswerteeinheit (9) in spektral zerlegten Empfangssignalen (6a) vorhandene Frequenzanteile hinsichtlich Anzahl und/oder Pegel gewichtet werden.

14. Optischer Sensor (1) nach einem der Ansprüche 1 bis 13, **dadurch gekennzeichnet, dass** in der Auswerteeinheit (9) in spektral zerlegten Empfangssignalen (6a) vorhandene Frequenzanteile hinsichtlich Phase oder Real- und/oder Imaginärteil eines komplexwertigen Spektrums gewichtet werden.

15. Optischer Sensor (1) nach einem der Ansprüche 1 bis 14, **dadurch gekennzeichnet, dass** der oder jeder Sender (4, 4.1-4.N) eine Folge von sich periodisch wiederholenden Signalabschnitten (11) emittiert, wodurch ein Frequenzspektrum mit Spektralanteilen mit zumindest näherungsweise konstantem Frequenzabstand und konstanten Pegeln erhalten wird.

16. Optischer Sensor (1) nach einem der Ansprüche 1 bis 15, **dadurch gekennzeichnet, dass** der oder jeder Sender (4, 4.1-4.N) eine Folge von sich periodisch wiederholenden Signalabschnitten (11) emittiert, wodurch ein Frequenzspektrum mit Spektralanteilen mit zumindest näherungsweise konstantem Frequenzabstand und konstanten Phasen erhalten wird.

17. Optischer Sensor (1) nach einem der Ansprüche 1 bis 16 **dadurch gekennzeichnet, dass** ein Signalabschnitt (11) zumindest näherungsweise den Signalverlauf eines Kardinal-Sinus aufweist.

18. Optischer Sensor (1) nach einem der Ansprüche 1 bis 17, **dadurch gekennzeichnet, dass** die spektrale Zerlegung von Empfangssignalen (6a) mittels einer FFT (Fast Fourier Transformation) durchgeführt wird.

19. Optischer Sensor (1) nach einem der Ansprüche 1 bis 18, **dadurch gekennzeichnet, dass** eine Abtastung von Frequenzlinien des spektralen Empfangssignals (6a) mit einer Abtastfrequenz erfolgt, die signifikant höher ist als die Frequenzen des spektral zerlegten Empfangssignals (6a).

20. Optischer Sensor (1) nach einem der Ansprüche 1 bis 19, **dadurch gekennzeichnet, dass** das Empfangssignal (6a) durch Mischung in ein niederfrequentes Empfangssignal (6b) transformiert wird und eine spektrale Zerlegung und Bewertung im niederfrequenten Frequenzbereich erfolgt.

21. Optischer Sensor (1) nach einem der Ansprüche 1 bis 20, **dadurch gekennzeichnet, dass** eine Unterabtastung des Empfangssignals (6a oder 6b) durchgeführt wird.

22. Optischer Sensor (1) nach einem der Ansprüche 1 bis 21, **dadurch gekennzeichnet, dass** die Auswerteeinheit (9) einen ASIC oder FPGA aufweist und/oder von auf einen Prozessor implementierten Softwaremodulen gebildet ist.

23. Optischer Sensor (1) nach einem der Ansprüche 1 bis 22, **dadurch gekennzeichnet, dass** Mittel für eine analoge Vorverarbeitung von Empfangssignalen (6a) vorhanden sind.

24. Optischer Sensor (1) nach einem der Ansprüche 1 bis 23, **dadurch gekennzeichnet, dass** jedem Empfänger (6, 6.1-6.N) ein Verstärker (16, 16.1-16.N, 17, 17.1-17.N) zur Verstärkung von Empfangssignalen (6a) oder einer Gruppe von Empfängern (6, 6.1-6.N) ein Verstärker (16, 16.1-16.N, 17, 17.1-17.N) zur Verstärkung von Empfangssignalen (6a) zugeordnet ist.

25. Optischer Sensor (1) nach einem der Ansprüche 1 bis 24, **dadurch gekennzeichnet, dass** Signalabschnitte (11) in einer Tabelle eines FPGA oder eines ASIC oder eines Prozessors abgespeichert sind, und dass Signalabschnitte (11) aus der Tabelle ausgelesen und über einen Digital-Analog-Wandler (14) dem oder einem Sender (4, 4.1-4.N) zugeführt werden.

26. Optischer Sensor (1) nach Anspruch 25, **dadurch gekennzeichnet, dass** in dem Digital-Analog-Wandler (14) generierte Signalfolgen analog nachbearbeitet werden.

27. Optischer Sensor (1) nach einem der Ansprüche 1 bis 26, **dadurch gekennzeichnet, dass** jeder Sender (4, 4.1-4.N) mittels eines Verstärkers (16, 16.1-16.N, 17, 17.1-17.N) oder Gruppen von Sendern (4, 4.1-4.N) mittels eines gemeinsamen Verstärkers (16, 16.1-16.N, 17, 17.1-17.N) angesteuert werden.

28. Optischer Sensor (1) nach einem der Ansprüche 1 bis 27, **dadurch gekennzeichnet, dass** dieser ein Sicherheitssensor ist.

29. Verfahren zum Betrieb eines optischen Sensors mit wenigstens einem Lichtstrahlen (3) emittierenden Sender (4, 4.1-4.N), wenigstens einem Lichtstrahlen (3) empfangenden Empfänger (6, 6.1-6.N) und einer Auswerteeinheit (9), in welcher abhängig von Empfangssignalen (6a) des Empfängers (6, 6.1-6.N) ein Objektfeststellungssignal generiert wird, **dadurch gekennzeichnet, dass** die Lichtstrahlen (3) mit einer Folge von Signalabschnitten (11) moduliert sind, wobei die modulierten Signalabschnitte (11) im Frequenzraum ein vorgegebenes Spektrum aufweisen, dass empfangsseitig eine spektrale Zerlegung von Empfangssignalen (6a) durchgeführt wird, und dass in der Auswerteeinheit (9) geprüft wird, ob in einem spektral zerlegten Empfangssignal (6a) eine Anzahl von vorgegebenen Frequenzanteilen vorhanden ist oder nicht und abhängig hiervon beurteilt wird, ob die vom Sender (4, 4.1-4.N) emittierten Lichtstrahlen (3) zum Empfänger (6, 6.1-6.N) geführt sind oder nicht.
